# EUROPÄISCHE PATENTSCHRIFT

(11) **EP 1 516 780 B1**
(45) Veröffentlichungstag und Bekanntmachung des Hinweises auf die Patenterteilung: **31.10.2007**
(21) Anmeldenummer: 04021655.8
(22) Anmeldetag: 11.09.2004
(51) Int. Cl.: B60P 3/38, A47C 17/80, B60N 3/00

(54) **Liege für ein LKW-Fahrerhaus**
Day bed for a truck cabin
Couchette pour une cabine de camion

(30) Priorität: 20.09.2003 DE 10343601
(43) Veröffentlichungstag der Anmeldung: 23.03.2005
(73) Patentinhaber: MAN Nutzfahrzeuge Aktiengesellschaft, 80995 München (DE)
(72) Erfinder: Kneifel, Eberhard, 89250 Senden (DE); Mederle, Günther, 85051 Ingolstadt (DE)

(56) Entgegenhaltungen:
- US-A- 3 742 529
- US-A- 4 659 137
- US-A- 4 664 438

## Beschreibung

Die Erfindung betrifft eine Liege für ein LKW-Fahrerhaus, die so umwandelbar ist, dass sie einen Stauraum bildet.

Häufig sind in LKW-Fahrerhäusern, insbesondere bei größeren LKW-Fahrerhäusern, zwei Schlafliegen eingebaut, die auch während der Fahrt benutzt werden können. Dabei wird oft eine der Liegen als ein Stauraum oder als eine Ablage zweckentfremdet, da es an einem extra dafür vorgesehenen Stauraum mangelt.

Die US 4,659,137 beschreibt ein Fahrerhaus eines Nutzfahrzeuges, das mit einer zusammenfaltbaren Schlafliege ausgerüstet ist. Die Schlafliege kann zum Ausruhen einer Person ausgezogen werden. Wenn die Schlafliege nicht zum Ausruhen einer Person benötigt wird, wird sie zusammengeschoben an der Rückwand des Fahrerhauses aufbewahrt. Im zusammengeschobenen Zustand kann sie auch zum Verstauen von Gegenständen dienen. Diese Schlafliege bietet jedoch im zusammengeschobenen Zustand nur einen relativ kleinen Stauraum, der für größere und sperrigere Gegenstände ungeeignet ist.

Die Erfindung hat die Aufgabe eine Liege der eingangs genannten Art dahingehend zu verbessern, dass sowohl kleinere als auch größere und sperrigere Gegenständen während der Fahrt sicher verstaut sind.

Die Erfindung löst die gestellte Aufgabe, durch eine Liege für ein LKW-Fahrerhaus der eingangs genannten Art, bei der erfindungsgemäß der Stauraum auf mehrere Größen einstellbar ist. Dadurch kann das Fassungsvermögen des Stauraums an die zu verstauenden Gegenstände angepasst werden. Diese Lösung eignet sich auch besonders gut für mit zwei Liegen ausgestattete LKW-Fahrerhäuser. Dann kann eine Liege als konventionelle Schlafliege ausgebildet sein und die zweite Liege eine erfindungsgemäße Liege mit verstellbarem Stauraum sein. Natürlich ist es auch möglich, bei mit zwei Liegen ausgestatteten LKW-Fahrerhäusern beide Liegen als erfindungsgemäße Liegen auszubilden. Bei LKW-Fahrerhäusern ohne eingebaute Liege ist ebenfalls das nachträgliche Vorsehen der erfindungsgemäßen Liege möglich. Bei der Verwendung der erfindungsgemäßen Liege als Schlafliege kann diese auch nur eine Notliege sein, um Gewicht und Kosten zu sparen.

Um die Liege sowohl als Schlafliege als auch als Stauraum verwenden zu können, kann sie mit einer Bespannung versehen sein. Diese Bespannung kann dann als Ruhefläche und auch zur Begrenzung des Stauraums dienen.

In einer besonderen Ausführungsform weist die Liege an ihren Enden in Längsrichtung jeweils zwei Schenkel auf, die mit einem Schwenkelement miteinander verbunden sind. Durch Verschwenken der Schenkel in bestimmte Stellungen, kann das Stauraumvolumen an die Größe der zu verstauenden Gegenstände angepasst werden. Außerdem kann durch die Positionierung der in Fahrtrichtung betrachtet vorderen Schenkel die vordere Stauraumbegrenzung so ausgerichtet werden, dass ein Herausfallen der verstauten Gegenstände bei einem plötzlichen Bremsmanöver vermieden wird.

Um die in eine bestimmte Position verschwenkten Schenkel arretieren zu können, kann das Schwenkelement mit einer Arretiereinrichtung versehen sein.

In einer anderen Ausführungsform kann die Liege an ihren Längsenden jeweils mindestens zwei teleskopartig ineinandergesteckte Hohlprofile aufweisen. Diese Hohlprofile können abhängig von den zu verstauenden Gegenständen auseinander gezogen oder ineinandergeschoben werden, wodurch das Stauraumvolumen an die zu verstauenden Gegenstände angepasst wird. Die Hohlprofile können zu diesem Zweck ganz zusammengeschoben sein oder ganz auseinander gezogen sein oder bestimmte Zwischenstellungen einnehmen.

Damit die entsprechend der zu verstauenden Gegenstände ausgezogenen Hohlprofile in ihrer jeweiligen Auszugsstellung arretiert werden können, können die teleskopartig ineinandergesteckten Hohlprofile in verschiedenen Auszugsstellungen arretierbar sein. Die Hohlprofile können durch Bolzen, Schraubmechanismen etc. arretiert werden.

Die teleskopartig ineinandergesteckten Hohlprofile können vorteilhafterweise elektromotorisch oder pneumatisch oder hydraulisch und/oder manuell ausgezogen und zusammengeschoben werden. Wenn man die Hohlprofile elektromotorisch oder pneumatisch oder hydraulisch auseinanderzieht und zusammenschiebt erhöht dies den Bedienkomfort. Außerdem kann der elektromotorische oder pneumatische oder hydraulische Antrieb zur Unterstützung der manuellen Verlängerung oder Verkürzung der teleskopartig ineinandergesteckten Hohlprofile dienen.

Um zwei benachbarte Schenkel oder die teleskopartig ineinandergesteckten Hohlprofile mühelos entsprechend dem gewünschten Stauraumvolumen positionieren zu können, können zwei benachbarte Schenkel oder die teleskopartig ineinandergesteckten Hohlprofile in einer Führungsschiene geführt werden. Zweckmäßigerweise kann die Führungsschiene an einer Wand, vorzugsweise an einer Seitenwand des LKW-Fahrerhauses angebracht sein.

Die Schenkel oder die teleskopartig ineinandergesteckten Hohlprofile können an jedem Längsende der Liege in ihren freien Endbereichen Tragelemente aufweisen, die die Schenkel oder die Hohlprofile in Längsrichtung der Liege miteinander verbinden. Dann kann die Bespannung an den Tragelementen befestigt werden. Abhängig von der Stellung der Schenkel oder der Hohlprofile kann die zwischen den Tragelementen vorgesehene Bespannung eine Ruhefläche aufspannen oder den Stauraum begrenzen.

Wenn die Liege bei ihrer Verwendung als Stauraum an ihren Längsenden mit einer Herausfallsicherung versehen ist, können die verstauten Gegenstände auch bei Kurvenfahrten oder Erschütterungen vor einem Herausfallen aus dem als Liege umgewandelten Stauraum gesichert werden.

Um den knapp bemessenen Raum im LKW-Fahrerhaus auch bei der Verwendung der Liege als Stauraum optimal nutzen zu können, kann die Bespannung an ihrer Unterseite Ablagefächer aufweisen. Ein solches Ablagefach kann beispielsweise ein Zeitungssteckfach, ein Ablagenetz oder dergleichen sein.

Aus demselben Grund ist es möglich, die Liege mit Kleiderhaken und/oder Handtuchhaltern und dergleichen zu versehen.

Zweckmäßigerweise kann die Liege mit mindestens einer Leseleuchte ausgestattet sein.

Damit auch LKW-Fahrerhäuser, die noch mit konventionellen Schlafliegen ausgestattet sind, mit den Vorteilen der erfindungsgemäßen Liege versehen werden können, kann die Liege nachgerüstet werden.

Außerdem betrifft die Erfindung ein LKW-Fahrerhaus mit mindestens einer Liege, wobei das LKW-Fahrerhaus erfindungsgemäß eine Liege nach einem der Ansprüche 1 bis 15 aufweist. Für den Fall, dass zunächst keine Schlafliege im LKW-Fahrerhaus angeordnet ist, kann eine erfindungsgemäße Schlafliege nachgerüstet werden.

Nachfolgend werden Ausführungsbeispiele anhand der beiliegenden Zeichnung näher erläutert.

Im Einzelnen zeigen:
- Fig. 1a: eine schematische Seitenansicht einer Liege in einer ersten Stauraumstellung;
- Fig. 1b: eine schematische Seitenansicht einer Liege in einer zweiten Stauraumstellung;
- Fig. 1c: eine schematische Seitenansicht einer Liege in einer Schlafliegestellung;
- Fig. 2a: eine perspektivische Draufsicht auf eine erste Ausführungsform einer Liege in einer Stauraumstellung;
- Fig. 2b: eine perspektivische Draufsicht auf die Liege aus Fig. 2a in einer Schlafliegestellung;
- Fig. 3: eine Seitenansicht auf die Liege aus der Fig. 2a;
- Fig. 4: eine perspektivische Draufsicht auf eine zweite Ausführungsform der Liege in einer Schlafliegestellung;
- Fig. 5a: eine Seitenansicht auf die Liege aus Fig. 4 in einer Gebrauchsstellung
- Fig. 5b: eine Seitenansicht auf die Liege aus Fig. 4 in einer Stauraumstellung.

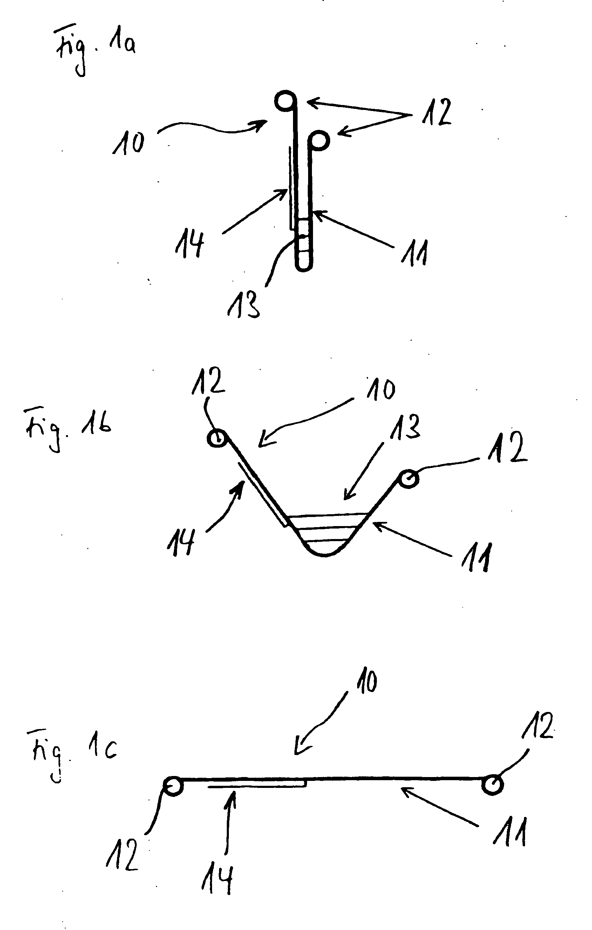

Fig. 1a zeigt eine Liege 10 in einer ersten Stauraumstellung. Eine Bespannung 11, die ein Netz oder ein Tuch sein kann, ist zwischen zwei Tragelementen 12 gespannt. In dieser sehr platzsparenden Stauraumstellung können kleinere und flache Gegenstände verstaut werden. Durch den als flachen Spalt ausgebildeten Stauraum, den die Liege 10 in dieser Stauraumstellung bildet, sind die verstauten Gegenstände gut gegen ein Verrutschen oder Herausfallen gesichert. Als zusätzliche Maßnahme, um ein unerwünschtes Herausfallen der verstauten Gegenstände zu vermeiden, ist die Liege 10 mit einer Herausfallsicherung 13, die hier beispielsweise durch ein Netz realisiert ist, ausgerüstet. Anstelle eines Netzes können alternativ andere, hierfür geeignete Begrenzungs-, Rückhalte-, oder sonstige Befestigungsmittel wie beispielsweise Haltegurte, Haltefolien, Haltebänder oder dergleichen vorgesehen sein. In dieser Stauraumstellung kann die Liege 10 folglich während der Fahrt oder im Fahrzeugstillstand verwendet werden. Zusätzlich weist die Liege 10 ein Ablagefach 14 auf, in das beispielsweise Zeitungen oder andere relativ flache Gegenstände während der Fahrt oder im Fahrzeugstillstand untergebracht werden können.

Fig. 1b zeigt die Liege aus Fig. 1a in einer zweiten, muldenförmigen Stauraumstellung. In dieser Stauraumstellung können sperrigere Gegenstände sicher deponiert werden. Da die Liege in dieser Stauraumstellung eine Mulde bildet, sind die deponierten Gegenstände, wie beispielsweise Bettzeug, Kleidung etc. durch die Muldenform sicher gegen Verrutschen oder Herausfallen gesichert. Auch hier verhindert die Herausfallsicherung 13 zusätzlich ein unerwünschtes seitliches Herausfallen der verstauten Gegenstände während der Fahrt. Auch in dieser Stauraumstellung ist die Liege während der Fahrt oder im Fahrzeugstillstand verwendbar.

In Fig. 1c ist die Liege 10 in einer Schlafliegestellung dargestellt. Die Tragelemente 12 sind dann in der Weise positioniert, dass die Bespannung 11 eine in etwa ebene Liegefläche aufspannt. Außer zum Ausruhen einer Person kann die Liege 10 in dieser Stellung auch als eine Ablagefläche für Gegenstände verwendet werden.

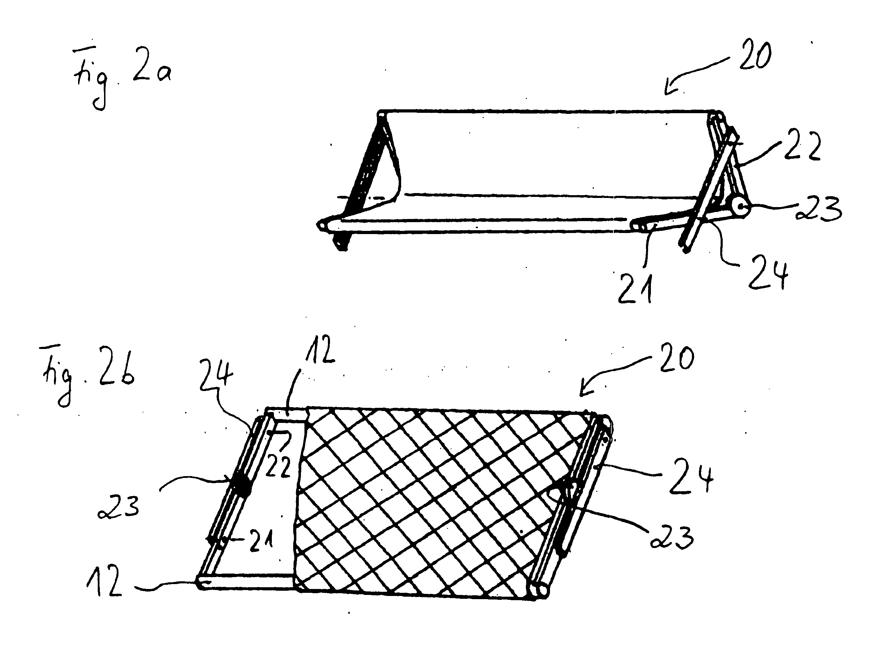

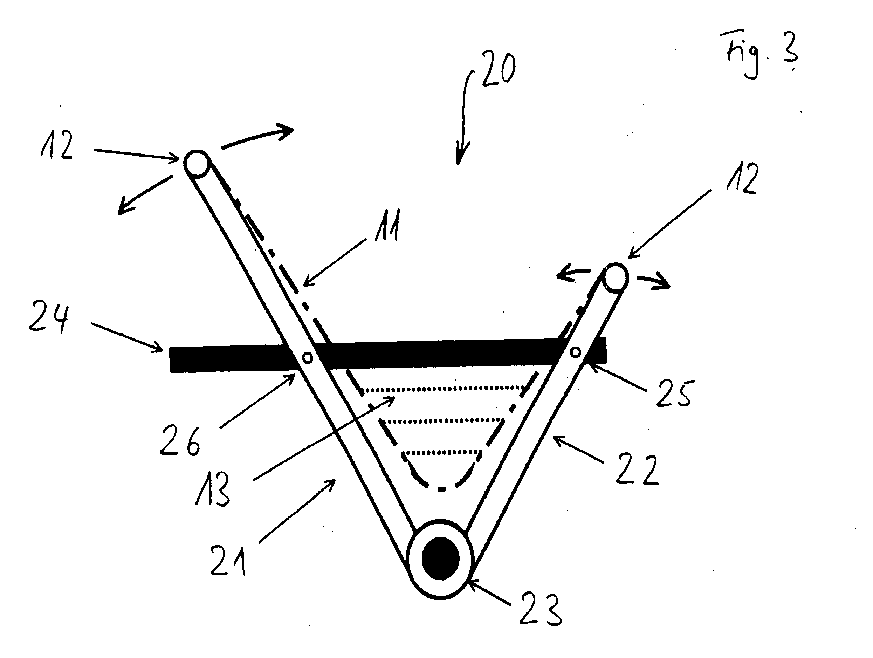

Die Fign. 2a, 2b und 3 zeigen eine erste Ausführungsform einer Liege 20 in einer Stauraumstellung und in einer Schlafliegestellung. Die Tragelemente 12 sind jeweils an Schenkeln 21 und 22 befestigt. Die Schenkel 21 und 22 sind durch ein Schwenkelement 23 verschwenkbar miteinander verbunden. Das Schwenkelement 23 ist mit einer hier nicht näher dargestellten Arretiereinrichtung versehen. Durch die Arretiereinrichtung kann die Positionierung der Schenkel 21 und 22 zueinander arretiert werden. Auf diese Weise wird der mit der Liege 20 gebildete Stauraum entsprechend der Größe der zu verstauenden Gegenstände eingestellt und arretiert. Da der Schenkel 21, der in Fahrtrichtung betrachtet vorne angeordnet ist, länger ist als der Schenkel 22, verhindert er ein Herausfallen der deponierten Gegenstände während eines scharfen Bremsmanövers. Die Schenkel 21 und 22 sind an einer Führungsschiene 24 beweglich angeordnet.

Wie in Fig. 3 gezeigt, ist der Schenkel 22 durch ein Drehlager 25 mit der Führungsschiene 24 verschwenkbar verbunden. Der Schenkel 21 ist durch ein Schiebe-Dreh-Lager 26 mit der Führungsschiene 24 verbunden. Durch das Schiebe-Dreh-Lager 26 kann der Schenkel 21 beim Verstellen der Stauraumgröße entlang der Führungsschiene 24 verschoben und relativ zur Führungsschiene 24 verschwenkt werden. In dem in Fig. 3 gezeigten Ausführungsbeispiel ist die Führungsschiene 24 zweckmäßigerweise an einer hier nicht näher dargestellten Seitenwand eines hier ebenfalls nicht gezeigten LKW-Fahrerhauses angeordnet. Je nach Stellung der Schenkel 21 und 22 spannt die Bespannung 11 eine ebene Schlafliege auf oder sie begrenzt den mit der Liege 20 gebildeten Stauraum. Die etwa horizontal verlaufende Führungsschiene 24 ist solcherart über das Drehlager 25 und das Schiebe-Dreh-Lager 26 mit dem Schenkel 22 bzw. dem Schenkel 21 gelenkig verbunden, dass letztere in Verstaulage der Liege 20 mit ihren freien Enden die Führungsschiene 24 in vertikaler Richtung überragen. In Gebrauchslage der Liege 20 befindet sich diese in etwa in Niveauhöhe der horizontalen Führungsschiene 24. Dadurch dass das Drehlager 25 und das Schiebe-Dreh-Lager 26 auf eingerückten Abschnitten der Schenkel 22,21 positioniert sind, ist eine gegenüber der Gesamttiefe der ausgeklappten, in Gebrauchslage befindlichen Liege 20 erheblich verkürzte Führungsschiene 24 darstellbar. Die Führungsschiene 24 und ihre Befestigung am LKW-Fahrerhaus benötigt daher in vorteilhafter Weise weniger Bauraum im LKW-Fahrerhaus. Somit ist die Anordnung der erfindungsgemäßen Liege 20 innerhalb des LKW-Fahrerhauses freier wählbar und unabhängiger von der Platzierung bzw. dem Platzbedarf sonstiger Bauteile wie beispielsweise Luftabsaugung im Heck oder Fahrplatzbereich im Frontbereich des LKW-Fahrerhauses.

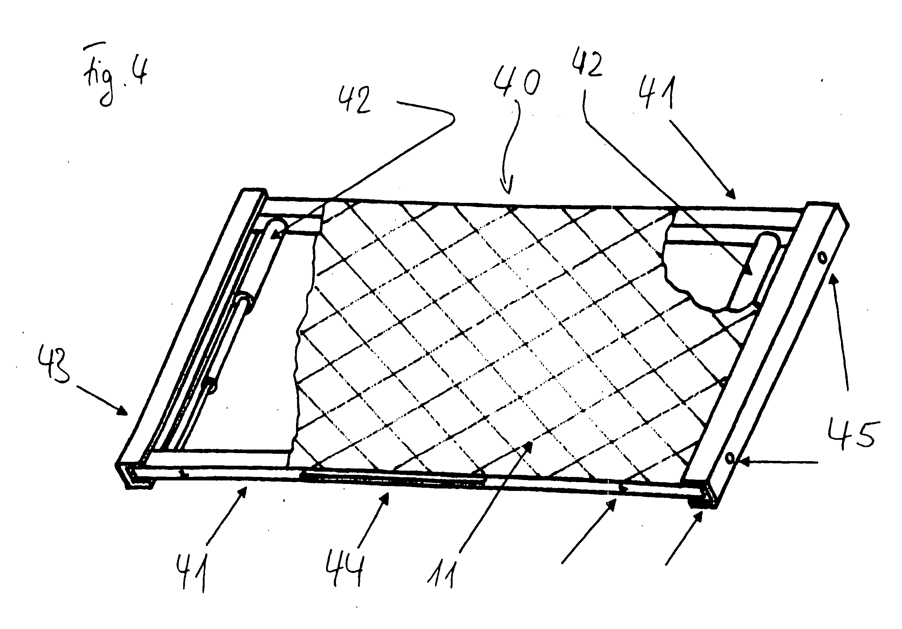

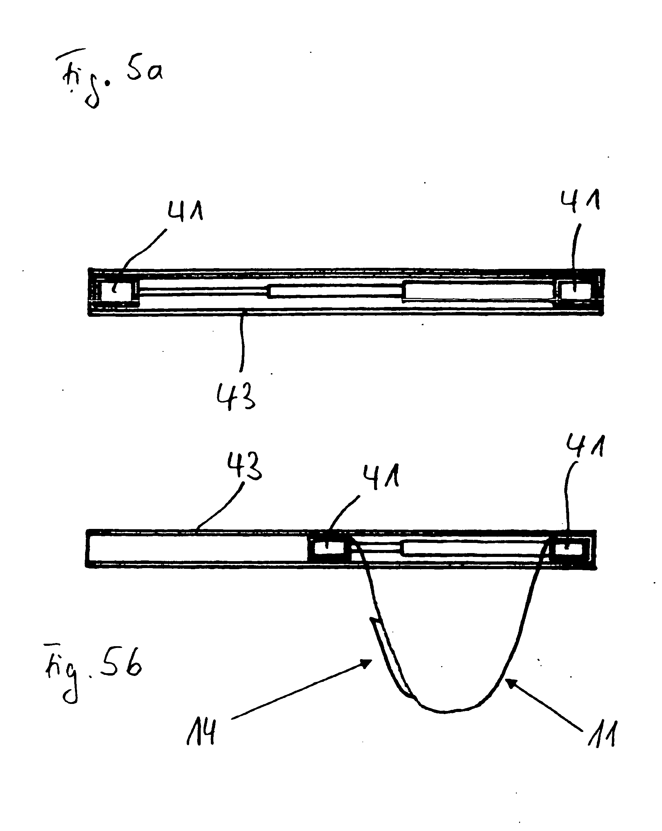

Die Fign. 4, 5a und 5b zeigen eine zweite Ausführungsform einer Liege 40. Auch in dieser Ausführungsform kann die Liege 40 sowohl als eine Schlafliege (siehe Fig. 5a) oder als ein Stauraum (siehe Fig. 5b) verwendet werden. Die Bespannung 11 ist zwischen zwei Tragelementen 41 aufgespannt. Die Tragelemente 41 sind durch teleskopartig ineinandergesteckte Hohlprofile 42 miteinander verbunden. Die Endbereiche der Tragschienen 41 sind in Führungsschienen 43 in Fahrzeuglängsrichtung verschiebbar. Somit kann das in Fahrtrichtung betrachtet vordere Tragelementen 41 in Fahrzeuglängsrichtung vor- oder zurückbewegt werden. Durch die Vor- oder Zurückbewegung kann die Größe des Stauraums entsprechend den jeweiligen Erfordernissen angepasst werden. Durch eine hier nicht näher dargestellte Arretiereinrichtung kann der Abstand der beiden Tragelemente 41 zueinander arretiert werden, wodurch die Stauraumgröße fixiert wird. Es ist möglich die teleskopartig ineinandergesteckten Hohlprofile 42 elektromotorisch oder pneumatisch oder hydraulisch und/oder manuell zu verschieben. Auch in dieser Ausführungsform können an der Liege 40 weitere Zusatzfunktionen vorgesehen sein. So ist es beispielsweise möglich an der Bespannung 11 das Ablagefach 14 vorzusehen. An der in Fahrtrichtung betrachtet vorderen oder hinteren Tragschiene 41 oder an sonstigen, hierfür geeigneten Orten der Liege 40 kann ein Handtuchhalter 44 angeordnet werden. Die Führungsschiene 43 kann beispielsweise mittels einer Schraub- oder Nietverbindung oder anderen geeigneten Mitteln an der Innenseite des LKW-Fahrerhauses befestigt werden. Bei der Befestigung der Führungsschiene 43 mittels Schraub- oder Nietverbindungen kann die Führungsschiene 43 mit Öffnungen 45 versehen sein, durch die die Befestigungselemente gesteckt werden können. Als Alternative hierzu kann die Führungsschiene 43 auch durch Schweißungen, Klebungen oder sonstigen Befestigungen, beispielsweise Steck- und Arretier Verbindungen an der Innenseite des LKW-Fahrerhauses angebracht sein.

### Bezugszeichenliste

- 10: Liege
- 11: Bespannung
- 12: Tragelement
- 13: Herausfallsicherung
- 14: Ablagefach
- 20: Liege
- 21: Schenkel
- 22: Schenkel
- 23: Schwenkelement
- 24: Führungsschiene
- 25: Drehlager
- 26: Schiebe-Dreh-Lager
- 40: Liege
- 41: Tragelement
- 42: Hohlprofil
- 43: Führungsschiene
- 44: Handtuchhalter
- 45: Öffnung

## Patentansprüche

1. Liege (10, 20, 40) für ein LKW-Fahrerhaus, die so umwandelbar ist, dass sie einen Stauraum bildet, **dadurch gekennzeichnet, dass** der Stauraum auf mehrere Größen einstellbar ist.

2. Liege (10, 20, 40) nach Anspruch 1, **dadurch gekennzeichnet, dass** sie eine Bespannung (11) aufweist.

3. Liege (10, 20) nach Anspruch 1 oder 2, **dadurch gekennzeichnet, dass** sie an ihren Enden in Längsrichtung jeweils zwei Schenkel (21, 22) aufweist, die mit einem Schwenkelement (23) miteinander verbunden sind.

4. Liege (10, 20) nach Anspruch 3, **dadurch gekennzeichnet, dass** das Schwenkelement (23) mit einer Arretiereinrichtung versehen ist.

5. Liege (40) nach Anspruch 1 oder 2, **dadurch gekennzeichnet, dass** sie an ihren Längsenden jeweils mindestens zwei teleskopartig ineinandergesteckte Hohlprofile (42) aufweist.

6. Liege (40) nach Anspruch 5, **dadurch gekennzeichnet, dass** die teleskopartig ineinandergesteckten Hohlprofile (42) in verschiedenen Auszugsstellungen arretierbar sind.

7. Liege (40) nach Anspruch 5 oder 6, **dadurch gekennzeichnet, dass** die teleskopartig ineinandergesteckten Hohlprofile (42) elektromotorisch oder pneumatisch oder hydraulisch und/oder manuell ausziehbar und zusammenschiebbar sind.

8. Liege (10, 20, 40) nach einem der Ansprüche 3 bis 7, **dadurch gekennzeichnet, dass** zwei benachbarte Schenkel (21, 22) oder die teleskopartig ineinandergesteckten Hohlprofile (42) in einer Führungsschiene (24, 43) führbar sind.

9. Liege (10, 20, 40) nach Anspruch 8, **dadurch gekennzeichnet, dass** die Führungsschiene (24, 43) an einer Wand des LKW-Fahrerhauses angebracht ist.

10. Liege (10, 20, 40) nach einem der Ansprüche 3 bis 9, **dadurch gekennzeichnet, dass** die zwei Schenkel (21, 22) oder die mindestens zwei teleskopartig ineinander gesteckten Hohlprofile (42) an jedem Längsende der Liege in ihren freien Endbereichen Tragelemente (12, 41) aufweisen, die die Schenkel (21, 22) oder die Hohlprofile (42) in Längsrichtung der Liege miteinander verbinden.

11. Liege (10, 20, 40) nach einem der Ansprüche 1 bis 10, **dadurch gekennzeichnet, dass** sie bei ihrer Verwendung als Stauraum an ihren Längsenden mit einer Herausfallsicherung (13) versehen ist.

12. Liege (10, 20, 40) nach Patentanspruch 2, **dadurch gekennzeichnet, dass** die Bespannung (11) an ihrer Unterseite Ablagefächer (14) aufweist.

13. Liege (10, 20, 40) nach einem der Ansprüche 1 bis 12, **dadurch gekennzeichnet, dass** sie Kleiderhaken und/oder Handtuchhalter (44) und dergleichen aufweist.

14. Liege (10, 20, 40) nach einem der Ansprüche 1 bis 13, **dadurch gekennzeichnet, dass** sie mit mindestens einer Leseleuchte ausgestattet ist.

15. Liege (10, 20, 40) nach einem der Ansprüche 1 bis 14, **dadurch gekennzeichnet, dass** sie nachrüstbar ist.

16. Liege (10,20) nach Anspruch 8, **dadurch gekennzeichnet, dass** in Gebrauchslage der Liege (10,20) die Führungsschiene (24) gegenüber der Längensumme der ausgeklappten Schenkel (21,22) verkürzt ausgeführt ist.

17. LKW-Fahrerhaus mit mindestens einer Liege, **dadurch gekennzeichnet, dass** es eine Liege (10, 20, 40) nach einem der Ansprüche 1 bis 16 aufweist.

## Claims

1. Bunk (10, 20, 40) for a truck cab, which can be converted in such a way that it forms a storage compartment, **characterised in that** said storage compartment can be adjusted to several sizes.

2. Bunk (10, 20, 40) according to Claim 1, **characterised in that** it features a fabric covering (11).

3. Bunk (10, 20) according to Claim 1 or 2, **characterised in that** each of its ends features two legs (21, 22) extending in longitudinal direction and connected with each other by means of a slewing element (23).

4. Bunk (10, 20) according to Claim 3, **characterised in that** the slewing element (23) is provided with a lock device.

5. Bunk (40) according to Claim 1 or 2, **characterised in that** at each of its longitudinal ends it features at least two hollow sections (42) which are plugged into each other in a telecopic manner.

6. Bunk (40) according to Claim 5, **characterised in that** the two hollow sections (42) plugged into each other in a telecopic manner can be locked in different extension positions.

7. Bunk (40) according to Claim 5 or 6, **characterised in that** the two hollow sections (42) plugged into each other in a telecopic manner can be extended or pushed together by an electric motor or pneumatically or hydraulically and/or manually.

8. Bunk (10, 20, 40) according to one of the Claims 3 to 7, **characterised in that** two adjacent legs (21, 22) or the hollow sections (42) plugged into each other in a telecopic manner can be guided in a guide rail (24, 43).

9. Bunk (10, 20, 40) according to Claim 8, **characterised in that** the guide rail (24, 43) is attached to a wall of the truck cab.

10. Bunk (10, 20, 40) according to one of the Claims 3 to 9, **characterised in that** the free end areas of the two legs (21, 22) or of the at least two hollow sections (42) plugged into each other in a telecopic manner feature carrying elements (12, 41) at each longitudinal end of the bunk, which carrying elements (12, 41) connect the legs (21, 22) or the hollow sections (42) with one another in longitudinal direction.

11. Bunk (10, 20, 40) according to one of the Claims 1 to 10, **characterised in that** if used as a storage compartment the bunk is equipped with an anti-fall-out device (13) at its longitudinal ends.

12. Bunk (10, 20, 40) according to Claim 2, **characterised in that** the fabric covering (11) features storage pockets (14) on its underside.

13. Bunk (10, 20, 40) according to one of the Claims 1 to 12, **characterised in that** it features coat hooks and/or towel holders (44) and similar devices.

14. Bunk (10, 20, 40) according to one of the Claims 1 to 13, **characterised in that** it features at least one reading lamp.

15. Bunk (10, 20, 40) according to one of the Claims 1 to 14, **characterised in that** it can be retrofitted.

16. Bunk (10, 20) according to Claim 8, **characterised in that** if the bunk (10, 20) is in use position the guide rail (24) is shorter than the sum of the lengths of the folded-out legs (21, 22).

17. Truck cab with at least one bunk, **characterised in that** it features a bunk (10, 20, 40) according to one of the Claims 1 to 16.

## Revendications

1. Couchette (10, 20, 40) d'une cabine de camion qui peut être transformée de telle manière qu'elle forme un espace de rangement, **caractérisée en ce que** l'espace de rangement est réglable en plusieurs dimensions.

2. Couchette (10, 20, 40) selon la revendication 1, **caractérisée en ce qu'**elle est pourvue d'une couverture (11).

3. Couchette (10, 20) selon la revendication 1 ou 2, **caractérisée en ce qu'**elle est pourvue à chacune de ses extrémités longitudinales de deux bras (21, 22) qui sont reliés entre eux au moyen d'un élément de pivotement (23).

4. Couchette (10, 20) selon la revendication 3, **caractérisée en ce que** l'élément de pivotement (23) est pourvu d'un dispositif de blocage.

5. Couchette (40) selon la revendication 1 ou 2, **caractérisée en ce qu'**elle est pourvue à chacune de ses extrémités longitudinales d'au moins deux profilés creux emboîtés de manière télescopique (42).

6. Couchette (40) selon la revendication 5, **caractérisée en ce que** les profilés creux emboîtés de manière télescopique (42) peuvent être bloqués dans différentes positions d'extension.

7. Couchette (40) selon la revendication 5 ou 6, **caractérisée en ce qu'**il est possible de sortir ou de rentrer les profilés creux emboîtés de manière télescopique (42) par moteur électrique ou de manière pneumatique ou hydraulique et/ou à la main.

8. Couchette (10, 20, 40) selon l'une des revendications 3 à 7, **caractérisée en ce que** deux bras avoisinants (21, 22) ou les profilés creux emboîtés de manière télescopique (42) peuvent être guidés dans une glissière de guidage (24, 43).

9. Couchette (10, 20, 40) selon la revendication 8, **caractérisée en ce que** la glissière de guidage (24, 43) est disposée sur une paroi de la cabine du camion.

10. Couchette (10, 20, 40) selon l'une des revendications 3 à 9, **caractérisée en ce que** les deux bras (21, 22) ou les deux profilés creux emboîtés de manière télescopique (42) au minimum à chaque extrémité longitudinale de la couchette sont pourvus sur leurs extrémités libres d'éléments porteurs (12, 41) reliant entre eux les bras (21, 22) ou les profilés creux (42) dans le sens longitudinal de la couchette.

11. Couchette (10, 20, 40) selon l'une des revendications 1 à 10, **caractérisée en ce qu'**elle est pourvue à ses extrémités longitudinales d'un dispositif anti-chute (13) lorsqu'elle est utilisée comme espace de rangement.

12. Couchette (10, 20, 40) selon la revendication 2, **caractérisée en ce que** la couverture (11) est pourvue de vide-poches (14) sur son dessous.

13. Couchette (10, 20, 40) selon l'une des revendications 1 à 12, **caractérisée en ce qu'**elle est pourvue de patères et/ou de porte-serviettes (44) et similaire.

14. Couchette (10, 20, 40) selon l'une des revendications 1 à 13, **caractérisée en ce qu'**elle est équipée d'au moins une liseuse.

15. Couchette (10, 20, 40) selon l'une des revendications 1 à 14, **caractérisée en ce qu'**elle peut être montée après coup.

16. Couchette (10, 20) selon la revendication 8, **caractérisée en ce que** la longueur de la glissière de guidage (24) est plus courte que le total des longueurs des bras dépliés (21, 22) lorsque la couchette (10, 20) est en position d'utilisation.

17. Cabine de camion pourvue d'au moins une couchette, **caractérisée en ce qu'**elle est équipée d'une couchette (10, 20, 40) selon l'une des revendications 1 à 16.
